# EUROPEAN PATENT SPECIFICATION

(11) **EP 0 361 739 B1**
(45) Date of publication and mention of the grant of the patent: **28.12.1994**
(21) Application number: 89309365.8
(22) Date of filing: 14.09.1989
(51) Int. Cl.: H04N 1/387, H04N 1/393

(54) **Scanning apparatus for reading an image**
Abtastgerät zum Bildlesen
Appareil de balayage pour lire une image

(30) Priority: 29.09.1988 JP 245510/88
(43) Date of publication of application: 04.04.1990
(73) Proprietor: SONY CORPORATION, Tokyo 141 (JP)
(72) Inventor: Koyama, Noboru c/o Patents Division, Shinagawa-ku Tokyo 141 (JP); Suzuki, Kiyosuke c/o Patents Division, Shinagawa-ku Tokyo 141 (JP)
(74) Representative: Thomas, Christopher Hugo

(56) References cited:
- EP-A- 0 016 299
- EP-A- 0 327 112

## Description

This invention relates to a method of reading an image of a document.

Such a method, which is understood to be known, comprises the steps of:
moving a line sensor and the document relative to each other, the line sensor having a plurality of aligned sensing devices and the direction of movement being at right angles to the direction of alignment of the sensing devices;
obtaining a first analogue image signal from the line sensor comprising a plurality of lines of image data;
analogue-to-digitally converting the first analogue image signal to produce a first digital image signal comprising a plurality of lines of a plurality of pixels of image data;
writing, in a first writing mode, the first digital image signal to locations in a memory having row and column addresses so that each line of image data is written to a respective row of locations having the same row address;
reading the memory to produce a second digital image signal; and
digital-to-analoguely converting the second digital image signal to produce a second analogue image signal.

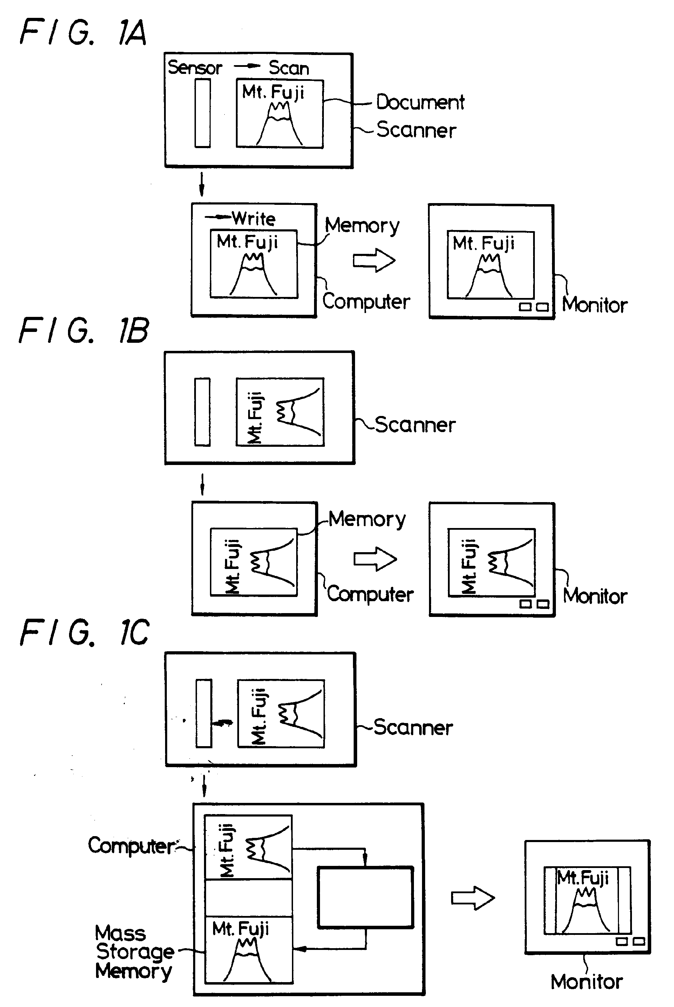

When the line sensor scans the document along the lateral direction thereof, if one line of the short side of the image data is stored in the memory in a storage area of one column line direction, the image data of one column line from the memory are displayed so as to become identical with the short side of the picture screen (see Figure 1A).

However, if a document oriented with its short sides in the up and down direction is scanned by the line sensor and the image data is displayed similarly as described above, the image is displayed such that it is turned laterally (see Figure 1B).

With the arrangement of Figure 1B, in order to enable the image to be displayed the right way up, one column line data stored in the memory may be converted by a coordinate converter so as to correspond to the lateral direction of the picture screen of the monitor, under control of the processing apparatus such as the computer (see Figure 1C). However, the required overall system to do this is expensive.

The method of the present invention is characterised by the steps of:
providing a second writing mode which can be selected instead of the first writing mode; and
in the second writing mode, writing the first digital image signal to locations in the memory so that each line of image data is written to a respective column of locations having the same column address.

Patent Application EP-A-0 016 299 describes a way in which an image can be magnified or reduced in size.

The method of the present invention may further comprise the steps of: selecting a magnifying mode; and, in the magnifying mode, writing the first digital image signal to locations in the memory so that each line of image data is written to a respective pair of rows or columns, as the case may be, of the memory. Also, the method of the present invention may further comprise the steps of: selecting a reducing mode; and, in the reducing mode, writing every other line of the first digital image signal to a respective row or column, as the case may be, of the memory.

The invention will now be described by way of example with reference to the accompanying drawings, throughout which like parts are referred to by like references, and in which:
Figures 1A to 1C are schematic views referred to in explaining a known scanning apparatus;
Figure 2 is a block diagram of an embodiment of scanning apparatus according to the present invention;
Figure 3 is a schematic representation of a line sensor;
Figure 4 is a schematic representation of a memory;
Figure 5 is a schematic representation of a document to be scanned;
Figures 6A to 6L are schematic representations of storage portions of the memory; and
Figures 7A and 7B are schematic representations of storage portions of the memory for explaining a magnifying mode and a reducing mode, respectively.

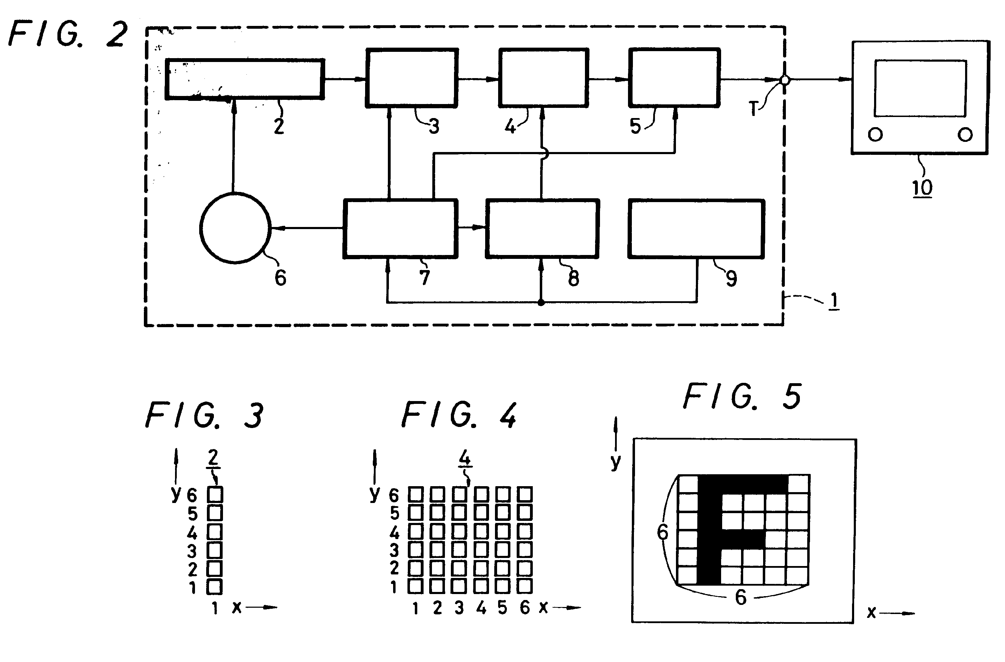

The scanning apparatus 1 of Figure 2 for reading an image is connected to a monitor receiver 10.

In the scanning apparatus 1, there is provided a line sensor 2 such as a charge-coupled device (CCD), which is driven by a motor 6 so that it moves in the direction perpendicular to the longitudinal direction thereof.

The line sensor 2 generates a line image signal as a sequence signal or a simultaneous signal of a picture element signal. This line image signal is supplied to an analogue-to-digital (A/D) converter 3, in which it is converted to a digital line image signal. The sequence signal of the line image signal from the line sensor 2 forms a two-dimensional image signal, accordingly, the sequence signal of the digital line image signal from the A/D converter 3 forms a digital two-dimensional image signal. The A/D converter 3 is supplied with a clock signal from a timing generator 7.

The digital two-dimensional image signal formed of the sequence signal of the digital line image signal from the A/D converter 3 is written in a two-dimension memory 4 and stored therein. The memory 4 is supplied with a write and read control signal from a memory controller 8, and is thereby controlled in its write and read operation. The memory controller 8 includes an address control circuit (not shown) which appoints addresses upon reading and writing the image signal from the memory 4. The address signal from the address control circuit is supplied to the memory 4. The memory controller 8 is supplied with write and read clock signals from the timing generator 7, and its address control circuit generates write and read address signals on the basis of the write and read clock signals.

The digital two-dimensional image signal formed of the sequence signal of the digital image signal read from the memory 4 is supplied to a digital-to-analogue (D/A) converter 5, in which it is converted to an analogue two-dimensional image signal. The analogue-two-dimensional signal from the D/A converter 5 is supplied through a terminal T to the monitor 10. The D/A converter 5 is supplied with the clock signal from the timing generator 7.

A row-line and column-line mode switching circuit 9 generates a switching signal which is supplied to the timing generator 7 and to the memory controller 8, whereby the write address in which the line image signal from the line sensor 2 is written in the memory 4 is switched as will be described later.

The operation will now be described with reference to Figures 3 to 6. In the following explanation, the digital image signal is a binary signal for simplicity, but the digital image signal is not limited to a binary signal but may for example be a multilevel signal such as an 8-bit signal.

The line sensor 2 is shown in Figure 3, and it is assumed that it is formed of six pixel sensor portions aligned in the y direction of an xy orthogonal coordinate system, and the six pixel sensor portions are represented by xy coordinates (1, 1), (1, 2), ..., (1, 6), respectively.

The memory 4 is shown in Figure 4, and it is assumed that it is formed of 6 x 6 pixel storing portions to correspond with the line sensor 2. The 6 x 6 pixel storing portions are represented by xy coordinates (1, 1), ..., (6, 6), respectively.

Figure 5 shows a document, and it is assumed that it is formed of 6 x 6 pixels which form a two-dimensional image whose configuration is square, to correspond with the line sensor 2 and the memory 4. This two-dimensional image includes a character [F] which placed correctly is as shown in Figure 5.

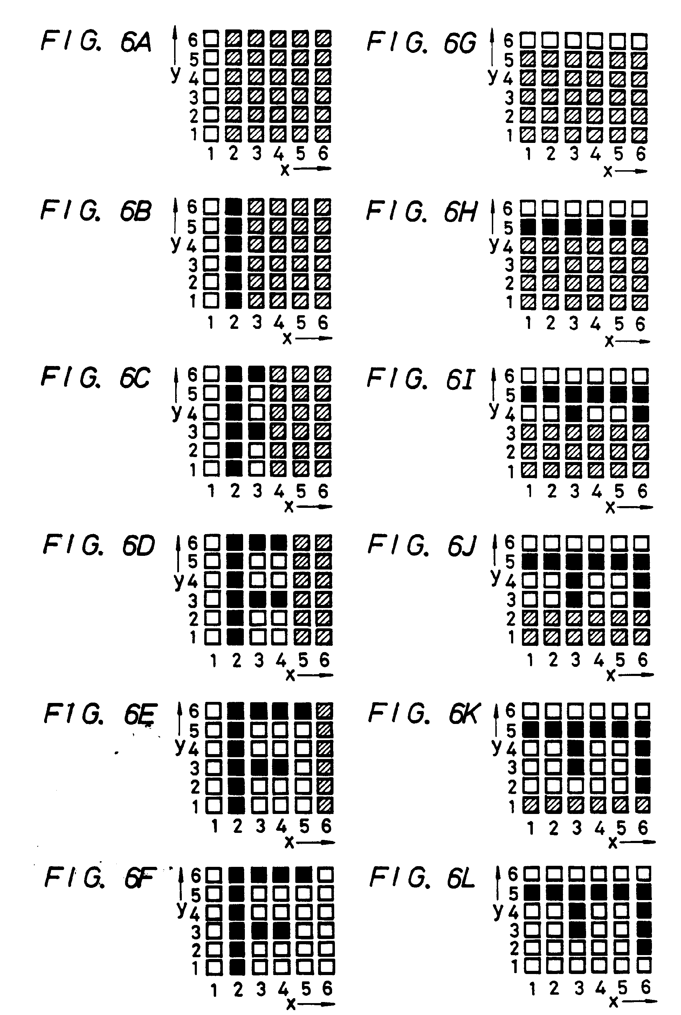

Figures 6A to 6L show respective pixel storing portions storing digital image signals. Throughout Figures 6A to 6L, a hatched square portion represents a portion in which a digital image signal is not yet stored, an open square portion represents a portion in which a digital image signal [0] corresponding to white is stored, and a solid square portion represents a portion in which a digital image signal [1] corresponding to black is stored.

The operation when the mode switching circuit 9 is switched to the row-line mode will now be described. In this case, it is assumed that the line sensor 2 scans the two-dimensional image on the document in the x direction, that is, from left to right in Figure 5.

When the line sensor 2 scans six pixels on the first column from the left of the picture shown in Figure 5, then the line image signals from the line sensor 2 are converted to the digital line image signals by the A/D converter 3, and are respectively written in the memory 4 at its pixel storing portions designated by addresses (1, 1) to (1, 6) as shown in Figure 6A.

When the line sensor 2 scans six pixels on the second column from the left of the picture shown in Figure 5, then the line image signals from the line sensor 2 are converted to the digital line image signals by the A/D converter 3, and are respectively written in the memory 4 at its pixel storing portions designated by addresses (2, 1) to (2, 6) as shown in Figure 6B.

When the line sensor 2 scans six pixels on the third column from the left of the picture shown in Figure 5, then the line image signals from the line sensor 2 are converted to the digital line image signals by the A/D converter 3, and are respectively written in the memory 4 at its pixel storing portions designated by addresses (3, 1) to (3, 6) as shown in Figure 6C.

When the line sensor 2 scans six pixels on the fourth column from the left of the picture shown in Figure 5, then the line image signals from the line sensor 2 are converted to the digital line image signals by the A/D converter 3, and are respectively written in the memory 4 at its pixel storing portions designed by addresses (4, 1) to (4, 6) as shown in Figure 6D.

When the line sensor 2 scans six pixels on the fifth column from the left of the picture shown in Figure 5, then the line image signals from the line sensor 2 are converted to the digital line image signals by the A/D converter 3, and are respectively written in the memory 4 at its pixel storing portions designated by addresses (5, 1) to (5, 6) as shown in Figure 6E.

When the line sensor 2 scans six pixels on the sixth column from the left of the picture shown in Figure 5, then the line image signals from the line sensor 2 are converted to the digital line image signals by the A/D converter 3, and are respectively stored in the memory 4 at its pixel storing portions designated by addresses (6, 1) to (6, 6) as shown in Figure 6F.

Thus, when the digital image signals stored in the pixel storing portions of the memory 4 are sequentially read out in the order of addresses (1, 6), (2, 6), ..., (6, 6), (1, 5), ..., (6, 5), (1, 4), (2, 4), ..., (6, 4), ..., (1, 1), (2, 1), ..., (6, 1), converted to analogue pixel signals by the D/A converter 5, and are fed to the monitor 10, then a two-dimensional picture including the character [F], correctly oriented, is displayed on the display screen of the monitor 10.

The operation when the mode switching circuit 9 is switched to the column-line mode will be described next. In this case, it is assumed that the line sensor 2 scans the two-dimensional image of the document from left to right in the x direction shown in Figure 5.

When the line sensor 2 scans six pixels on the first column from the left of the picture, then the line image signals from the line sensor 2 are converted to the digital line image signals by the A/D converter 3, and are respectively written in the memory 4 at its pixel storing portions designated by addresses (1, 6) to (6, 6) as shown in Figure 6G.

When the line sensor 2 scans six pixels on the second column from the left of the picture, then the line image signals from the line sensor 2 are converted to the digital line image signals by the A/D converter 3 and are respectively written in the memory 4 at its pixel storing portions designated by addresses (1, 5) to (6, 5) as shown in Figure 6H.

When the line sensor 2 scans six pixels on the third column from the left of the picture, then the line image signals from the line sensor 2 are converted to the digital line signals by the A/D converter 3 and are respectively written in the memory 4 at its pixel storing portions designated by addresses (1, 4) to (6, 4) as shown in Figure 6I.

When the line sensor 2 scans six pixels on the fourth column from the left of the picture, then the line image signals from the line sensor 2 are converted to the digital line signals by the A/D converter 3 and are respectively written in the memory 4 at its pixel storing portions designated by addresses (1, 3) to (6, 3) as shown in Figure 6J.

When the line sensor 2 scans six pixels on the fifth column from the left of the picture, then the line image signals from the line sensor 2 are converted to the digital line signals by the A/D converter 3 and are respectively written in the memory 4 at its pixel storing portions designated by addresses (1, 2) to (6, 2) as shown in Figure 6K.

When the line sensor 2 scans six pixels on the sixth column from the left of the picture, then the line image signals from the line sensor 2 are converted to the digital line signals by the A/D converter 3 and are respectively written in the memory 4 at its pixel storing portions designated by addresses (1, 1) to (6, 1) as shown in Figure 6L.

Thus, when the digital pixel signals of the respective pixel storing portions of the memory 4 are sequentially read out in the order of (1, 6), (2, 6), ..., (6, 6), (1, 5), ..., (6, 5), (1, 4), (2, 4), ..., (6, 4), ..., (1, 1), (2, 1), ..., (6, 1), fed to the D/A converter 5, in which they are converted to the analogue pixel signals and then are fed to the monitor 10, a two-dimensional picture including a character [F], which is rotated by 90° in the clockwise direction, is displayed on the picture screen of the monitor 10.

In this embodiment, when the digitized signals of the line image signal from the line sensor 2 are written in the six vertically-aligned pixel storing portions of the two-dimension memory 4 from left to right in Figure 6, or when the digitized signals are written in the memory 4 at its six horizontally-aligned pixel storing portions from top to bottom in Figure 6, the two-dimensional image of the two-dimensional image signal read out of the document can be selectively arranged in the same direction or it can be rotated by 90°. The two-dimensional image of the two-dimensional image signal derived by scanning the document can be selectively displayed in the original condition or in the condition rotated by 180° by writing the digitized signal of the line image signal from the line sensor 2 in the two-dimension memory 4 at its six vertically-aligned pixel storing portions from either left to right or from right to left in Figure 6. Moreover, by the combination of the above-mentioned manners, the two-dimensional image of the two-dimensional image signal obtained by scanning the document can be selectively displayed in the original orientation, or rotated by 90° or rotated by 180°.

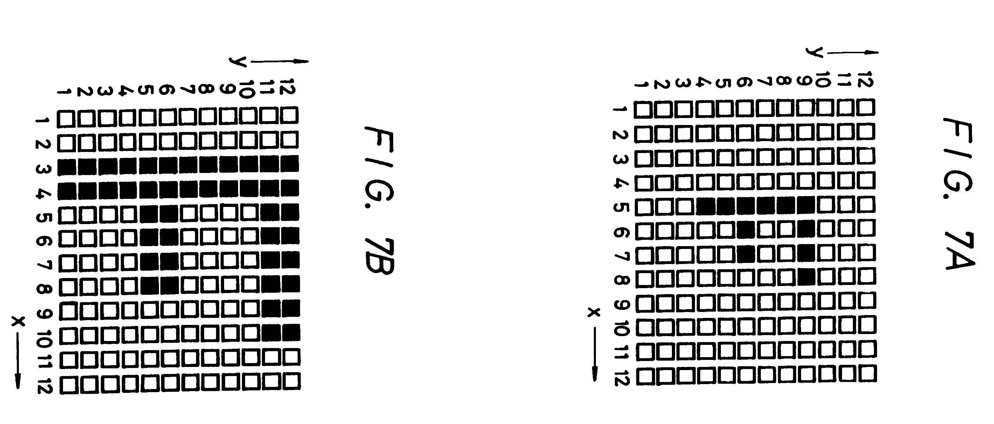

A magnifying mode and a reducing mode in which the two-dimensional image signal, obtained by scanning the document, is magnified or reduced in size will now be described with reference to Figures 7A and 7B.

The magnifying mode will be explained first. The pixel storing portion of the memory 4 is assumed to be formed of 12 x 12 but the line sensor 2 is formed of six pixel sensor portions. In this case, the two-dimensional image on the document is formed of 6 x 6 pixels similary to Figure 5.

Figures 7A and 7B show the condition in which image data are stored in the memory 4. Of 12 x 12 pixel storing portions in the memory 4, the central 6 x 6 pixel storing portions represented by xy coordinates (4, 4) to (9, 9) are used as normal storage areas, wherein in the normal mode (magnify-by-one mode) the digitized signals of the line image signals from the line sensor 2 are stored in the normal storage areas by operations similar to those as shown in Figure 7A. Moreover, the whole of 12 x 12 pixel storage portions of the memory 4 is used as a magnifying storage area, whereby in the magnifying (magnify-by-two) mode the digitized signals of the line image signals formed of 6 pixel signals from the line sensor 2 are sequentially written in two columns of pixel storage portions (24 pixel storage portions in total) in the vertical direction of the memory 4 from left to right. Thus, when the line sensor 2 scans the document having the two-dimensional image, the memory 4 stores a two-dimensional image signal which is magnified twice in the vertical and horizontal directions, as shown in Figure 7B.

The reducing mode will now be explained. Again, the memory 4 is assumed to comprise 12 x 12 pixel storage portions, and in correspondence therewith, the line sensor 2 is comprised of twelve pixel sensor portions. In this event, the two-dimensional picture of the document is formed of 12 x 12 pixels. All the 12 x 12 pixel storage portions of the memory 4 are used as a normal storage area, whereby in the normal mode (magnify-by-one mode) the digitized signals of the line image signal derived from the line sensor 2 are written in the normal storage area by operations similar to those as shown in Figure 7B. Moreover, of the 12 x 12 pixel storage areas of the memory 4, central 6 x 6 pixel storage portions, represented by xy coordinates (4, 4) to (9, 9) are used as reducing storage areas, wherein in the reducing mode (reduce-to-1/2) the line image signals formed of every other pixel signal of the digitized signals of the line image signal formed of twelve pixel signals derived from the line sensor 2 are sequentially written in every other line address of 6 pixel storage portions of the reducing storage area of the memory 4 from left to right. Thus, when the line sensor 2 scans the document having the same two-dimensional image as that of Figure 7B, then a two-dimensional image, which is reduced to 1/2 in size in the horizontal and vertical directions, is stored in the memory 4 as shown in Figure 7A.

By the combination of the magnifying mode and the reducing mode, it is possible to change the displayed orientation and condition of the two-dimensional image of the two-dimensional image signal in five ways.

The magnifying ratio and the reducing ratio are not limited to those as described above and may be selected freely.

Although the present invention is particularly suitable for application to the above image scanning apparatus in which the line sensor scans the rectangular, standardized document along the longitudinal direction thereof and the line sensor supplies the two-dimensional image signal composed of successive line image signals, the invention is not limited to this application.

While the line sensor is moved so as to scan the document in the above embodiment, it is possible for a document on a document holder to be moved relative to the line sensor.

Embodiments of the present invention, can provide an apparatus for reading an image in which without using a memory of large capacity and a processing apparatus such as a computer, the modes in which the two-dimensional image of the two-dimensional image signal formed of the line image signals sequentially read by the line sensor is located can be changed with ease.

## Claims

1. A method of reading an image of a document, comprising the steps of:
moving a line sensor and the document relative to each other, the line sensor having a plurality of aligned sensing devices and the direction of movement being at right angles to the direction of alignment of the sensing devices;
obtaining a first analogue image signal from the line sensor comprising a plurality of lines of image data;
analogue-to-digital converting the first analogue image signal to produce a first digital image signal comprising a plurality of lines of a plurality of pixels of image data;
writing, in a first writing mode, the first digital image signal to locations in a memory having row and column addresses so that each line of image data is written to a respective row of locations having the same row address;
reading the memory to produce a second digital image signal; and
digital-to-analogue converting the second digital image signal to produce a second analogue image signal;
characterised by the steps of:
providing a second writing mode which can be selected instead of the first writing mode; and
in the second writing mode, writing the first digital image signal to locations in the memory so that each line of image data is written to a respective column of locations having the same column address.

2. A method according to claim 1 further comprising the step of supplying the second analogue image signal to a monitor.

3. A method according to claim 1 or 2, further comprising the steps of: selecting a magnifying mode; and, in the magnifying mode, writing the first digital image signal to locations in the memory so that each line of image data is written to a respective pair of rows or columns, as the case may be, of the memory.

4. A method according to any preceding claim, further comprising the steps of: selecting a reducing mode; and, in the reducing mode, writing every other line of the first digital image signal to a respective row or column, as the case may be, of the memory.

## Patentansprüche

1. Verfahren zum Lesen des Bilds eines Dokuments mit den Schritten:
Bewegen eines Zeilensensors und des Dokuments relativ zueinander, wobei der Zeilensensor mehrere in einer Linie liegende Sensorvorrichtungen umfaßt und die Bewegungsrichtung rechtwinklig zur Ausrichtung der Sensorvorrichtungen ist;
Gewinnung eines ersten analogen Bildsignals vom Zeilensensor, das mehrere Zeilen von Bilddaten umfaßt;
Analog/Digital-Umwandlung des ersten analogen Bildsignals, um ein erstes digitales Bildsignal zu erzeugen, das mehrere Zeilen von mehreren Bilddatenpixeln aufweist;
Einschreiben des ersten digitalen Bildsignals, in einem ersten Schreibmodus, in Bereiche eines Speichers, der Zeilen- und Spalten-Adressen besitzt, so daß jede Zeile der Bilddaten in eine jeweilige Zeile der Bereiche mit der gleichen Zeilen-Adresse eingeschrieben wird;
Auslesen des Speichers, um ein zweites digitales Bildsignal zu erzeugen; und
Digital/Analog-Umwandeln des zweiten digitalen Bildsignals, um ein zweites analoges Bildsignal zu erzeugen;
**gekennzeichnet durch** die Schritte:
Vorsehen eines zweiten Schreibmodus, der anstelle des ersten Schreibmodus ausgewählt werden kann; und
Einschreiben des ersten digitalen Bildsignals, im zweiten Schreibmodus, in Speicherbereiche, so daß jede Zeile der Bilddaten in eine jeweilige Spalte der Bereiche mit der gleichen Spalten-Adresse eingeschrieben wird.

2. Verfahren nach Anspruch 1 mit dem weiteren Schritt:
Zuführen des zweiten analogen Bildsignals zu einem Monitor.

3. Verfahren nach Anspruch 1 oder 2 mit den weiteren Schritten:
Auswahl eines Vergrößerungsmodus; und
Einschreiben des ersten digitalen Bildsignals, im Vergrößerungsmodus, in Speicherbereiche, so daß jede Zeile der Bilddaten in ein jeweiliges Paar von Zeilen oder Spalten des Speichers, je nach Fall, eingeschrieben wird.

4. Verfahren nach einem der vorhergehenden Ansprüche mit den weiteren Schritten:
Auswahl des Verkleinerungsmodus; und
Einschreiben jeder anderer Zeile des ersten digitalen Bildsignals, im Verkleinerungsmodus, in eine jeweilige Zeile oder Spalte des Speichers, je nach Fall.

## Revendications

1. Procédé de lecture d'une image d'un document, comprenant les étapes consistant à:
- déplacer un capteur à barrette de détecteurs et le document l'un par rapport à l'autre, le capteur à barrette de détecteurs ayant une pluralité de dispositifs détecteurs alignés et la direction du mouvement étant à angle droit par rapport à la direction d'alignement des dispositifs détecteurs;
- obtenir un premier signal analogique d'image issu du capteur à barrette de détecteurs comprenant une pluralité de lignes de données d'image;
- convertir d'analogique en numérique le premier signal analogique d'image pour produire un premier signal numérique d'image comprenant une pluralité de lignes d'une pluralité d'éléments d'image de données d'image;
- écrire, dans un premier mode d'écriture, le premier signal numérique d'image dans des emplacements d'une mémoire ayant des adresses de lignes et de colonnes de telle manière que chaque ligne de données d'image soit écrite dans une ligne respective d'emplacements ayant la même adresse de ligne;
- lire la mémoire pour produire un deuxième signal numérique d'image; et
- convertir de numérique en analogique le deuxième signal numérique d'image pour produire un deuxième signal analogique d'image,
caractérisé par les étapes consistant à:
- prévoir un deuxième mode d'écriture qui peut être sélectionné au lieu du premier mode d'écriture; et
- dans le deuxième mode, écrire le premier signal numérique d'image dans des emplacements dans la mémoire de telle manière que chaque ligne de données d'image soit écrite dans une colonne respective d'emplacements ayant la même adresse de colonne.

2. Procédé selon la revendication 1, comprenant en outre l'étape consistant à fournir le deuxième signal analogique d'image à un présenteur vidéo.

3. Procédé selon la revendication 1 ou 2, comprenant en outre les étapes consistant à:
- sélectionner un mode d'agrandissement; et
- dans le mode d'agrandissement, écrire le premier signal numérique d'image dans des emplacements dans la mémoire de telle manière que chaque ligne de données d'image soit écrite dans une paire respective de lignes ou de colonnes, selon le cas, de la mémoire.

4. Procédé selon l'une quelconque des revendications précédentes, comprenant en outre l'étape consistant à:
- sélectionner un mode de réduction; et
- dans le mode de réduction, écrire une ligne sur deux du premier signal numérique d'image dans une ligne ou une colonne respective, selon le cas, de la mémoire.
